(19) **Europäisches Patentamt**
**European Patent Office**
**Office européen des brevets**

(11) **EP 4 751 677 A1**

(12) **EUROPEAN PATENT APPLICATION**
published in accordance with Art. 153(4) EPC

(43) Date of publication:
**03.06.2026 Bulletin 2026/23**

(21) Application number: **24845204.7**

(22) Date of filing: **03.06.2024**

(51) International Patent Classification (IPC):
**A61C 1/02** *(2006.01)*   **A61C 1/05** *(2006.01)*

(52) Cooperative Patent Classification (CPC):
**A61C 1/02; A61C 1/05**

(86) International application number:
**PCT/JP2024/020203**

(87) International publication number:
**WO 2025/022822 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023  JP 2023121222**

(71) Applicant: **Yoshida Institute of Technology Co.,
Ltd.**
**Tokyo 130-0022 (JP)**

(72) Inventor: **TAKEMOTO, Terumi**
**Tokyo 133-0044 (JP)**

(74) Representative: **Marks & Clerk LLP**
**15 Fetter Lane**
**London EC4A 1BW (GB)**

(54) **DENTAL HANDPIECE CONTROL SYSTEM**

(57)   A dental handpiece control system (2) comprises: a supply gas passage (60) to supply a compressed gas from a compressed gas source (50) to turbine blades (24) provided to a dental handpiece (20); an exhaust gas passage (70) to discharge the compressed gas after rotating the turbine blades; an exhaust gas pressure detection unit (110) to detect exhaust gas pressure, which is the pressure of the compressed gas in the exhaust gas passage; a target exhaust gas pressure setting unit (126) to set a target exhaust gas pressure; and a supply gas pressure control unit to control the supply gas pressure, which is the pressure of the compressed gas supplied to the turbine blades. The supply gas pressure control unit controls the supply gas pressure so that the exhaust gas pressure detected by the exhaust gas pressure detection unit will be equalized to the target exhaust gas pressure.

## FIG. 2

## Description

## TECHNICAL FIELD

The present invention relates to a technique for controlling a dental handpiece that operates with turbine blades rotated by compressed gas.

## BACKGROUND ART

Patent Literatures 1, 2, and 3 describe a control system of controlling a dental handpiece including turbine blades. Such control system keeps a rotational speed of the loaded turbine blades at a certain speed by using a detected exhaust gas pressure.

## CITATION LIST

### Patent Literature

Patent Literature 1: JP5314746
Patent Literature 2: US3865505
Patent Literature 3: JP2017-221300A

## SUMMARY OF INVENTION

### Technical Problem

In an actual dental treatment, the dental handpiece is required to achieve a high-speed rotation and high-torque operation for removing a restoration (such as metal), and perform a low-speed rotation and low-torque operation for performing finish cutting or the like. However, the control system in the background art controls the turbine blades at the constant rotational speed and is incapable of changing the rotational speed depending on what operation is to be performed in a dental treatment.

The present invention was made in view of the above problem, and has an object to provide a dental handpiece control system capable of suitably responding to a situation in a dental treatment.

### Solution to Problem

In order to solve the above problem, a dental handpiece control system in the present invention includes: a supply gas passage configured to supply compressed gas from a compressed gas source to a turbine blade provided in a dental handpiece; an exhaust gas passage configured to discharge the compressed gas after rotating the turbine blade; an exhaust gas pressure detection unit configured to detect an exhaust gas pressure which is a pressure of the compressed gas in the exhaust gas passage; a target exhaust gas pressure setting unit configured to set a target exhaust gas pressure; and a supply gas pressure control unit configured to control a supply gas pressure which is a pressure of the compressed gas to be supplied to the turbine blade. The supply gas pressure control unit controls the supply gas pressure so that the exhaust gas pressure detected by the exhaust gas pressure detection unit will be equalized to the target exhaust gas pressure.

### Advantageous Effects of Invention

According to the present invention, the rotational speed of turbine blades is changed by setting a target exhaust gas pressure, which makes it possible to suitably respond to a situation in a dental treatment.

## BRIEF DESCRIPTION OF DRAWINGS

[FIG. 1] FIG. 1 is a perspective view schematically showing a dental treatment unit to which a dental handpiece control system according to an embodiment of the present invention is applied.
[FIG. 2] FIG. 2 is a perspective view schematically showing a hose, an attachment, a dental handpiece, and a bur.
[FIG. 3] FIG. 3 is a diagram schematically showing compressed gas passages in the dental handpiece control system according to the embodiment of the present invention.
[FIG. 4] FIG. 4 is a block diagram schematically showing the dental handpiece control system according to the embodiment of the present invention.
[FIG. 5] FIG. 5 is a graph presenting an example of time characteristics of exhaust gas pressures in dental handpieces, showing a difference in the time characteristic of the exhaust gas pressure among types of dental handpieces.
[FIG. 6] FIG. 6 is a graph presenting an example of time characteristics of exhaust gas pressures in dental handpieces, showing the time characteristic of the exhaust gas pressure in a normal dental handpiece and the time characteristic of the exhaust gas pressure in a dental handpiece in which a malfunction occurs.
[FIG. 7] FIG. 7 is a graph presenting an example of a method of controlling a proportional valve based on an exhaust gas pressure, for explaining a case where the target exhaust gas pressure is set to a target exhaust gas pressure initial value and a case where the target exhaust gas pressure is set based on an operation.
[FIG. 8] FIG. 8 is a graph presenting an example of the method of controlling the proportional valve based on the exhaust gas pressure, for explaining a case where the target exhaust gas pressure is automatically reset when a load is increased.
[FIG. 9] FIG. 9 is a graph presenting an example of the method of controlling the proportional valve based on the exhaust gas pressure, for explaining a case where the target exhaust gas pressure is automatically reset when a load is decreased.

[FIG. 10] FIG. 10 is a flowchart for explaining a method of determining a type of a dental handpiece and whether the dental handpiece is normal and a method of identifying a type of malfunction in the dental handpiece control system according to the embodiment of the present invention.

[FIG. 11] FIG. 11 is a graph presenting an example of the method of controlling the proportional valve based on the exhaust gas pressure, for explaining a case where the target exhaust gas pressure is automatically set.

## DESCRIPTION OF EMBODIMENTS

An embodiment of the present invention will be described in detail with reference to the drawings. In the following description, the same elements will be assigned with the same reference signs, and the repetitive description thereof will be omitted.

<Dental Treatment Unit>

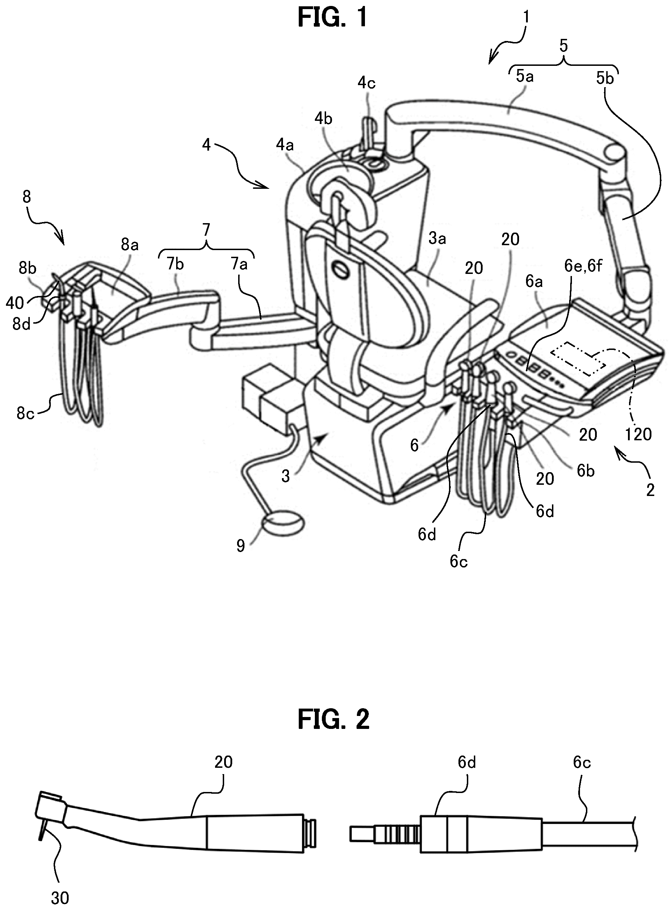

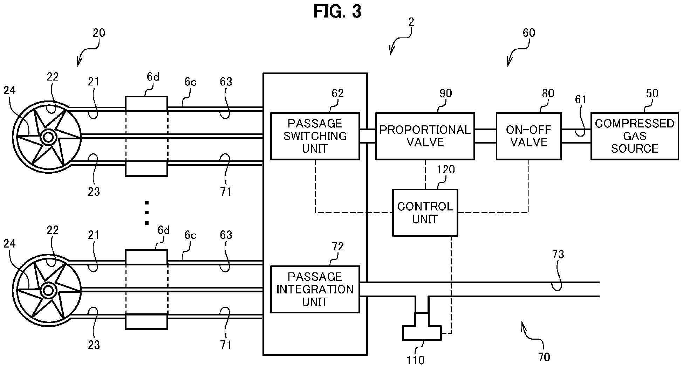

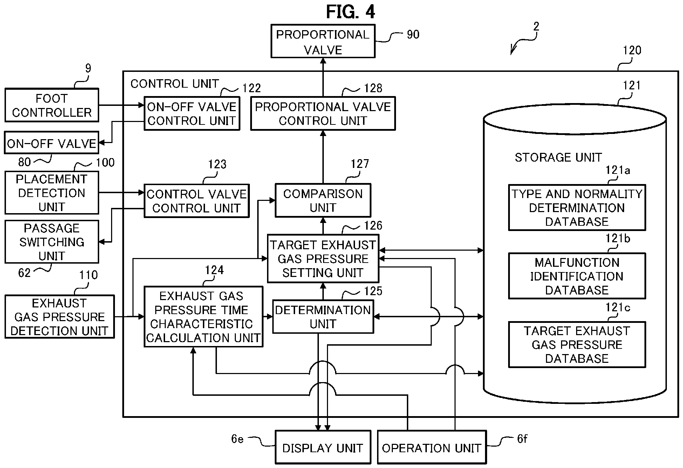

As shown in FIG. 1, a dental treatment unit 1 according to an embodiment of the present invention is a unit to be used by a doctor as a user for providing a dental treatment to a patient. A dental handpiece control system 2 (see FIGs. 3 and 4) is applied to the dental treatment unit 1. The dental treatment unit 1 includes, as basic components, a chair module 3, a base unit 4, a first support section 5, a treatment table 6, a second support section 7, an assistant table 8, and a foot controller 9.

<Chair Module>

The chair module 3 includes a chair main body 3a for a patient.

<Base Unit>

The base unit 4 is arranged on one side of the chair module 3. The base unit 4 includes a spittoon base 4a, a spittoon 4b placed on the spittoon base 4a, and a water inlet 4c for supplying water to a cup for gargling.

<First Support Section>

The first support section 5 supports the treatment table 6 so that the treatment table 6 can be moved around the chair module 3. The first support section 5 includes arms 5a and 5b provided in series. One end (base end) of the arm 5a is coupled to a casing of the base unit 4 via a joint and the other end (tip end) of the arm 5a is coupled to the arm 5b via a joint. One end (base end) of the arm 5b is coupled to the arm 5a via the joint and the other end (tip end) of the arm 5b is coupled to the treatment table 6 via a joint.

<Treatment Table>

The treatment table 6 is used by the doctor (dentist) as a user. The treatment table 6 includes a table 6a, a hanger 6b, multiple sets of hoses 6c, attachments 6d, dental handpieces 20, and burs 30 (see FIG. 2), a display unit 6e, and an operation unit 6f.

<<Table>>

The table 6a is a place for placing items and others necessary for the doctor to provide a dental treatment.

<<Hanger>>

The hanger 6b is a place for hanging and holding the dental handpieces 20 attached to the attachments 6d. The hanger 6b is configured to be capable of holding the multiple dental handpieces 20 individually.

<<Hose>>

Each hose 6c is configured through which compressed gas (for example, compressed air) to be supplied to the dental handpiece 20 and the compressed gas discharged from the dental handpiece 20 can flow.

<<Attachment>>

Each attachment 6d is a metal member attached to the tip end of the hose 6c, and is configured to allow the dental handpiece 20 to be attached to and detached from the attachment 6d.

<<Dental Handpiece and Bur>>

As shown in FIG. 2, the dental handpiece 20 and the bur 30 constitute a tool (an example of an instrument) to be grasped by the doctor and used for treating (such as cutting) a patient's tooth. In the present embodiment, the dental handpiece 20 is detachably attached to the attachment 6d with the tip end of the attachment 6d press-fit into the base end of the dental handpiece 20. Purposes of use of the dental handpiece 20 and the bur 30 include cavity preparation for dental caries removal, preparation of proximal tooth surfaces, abutment tooth preparation for a prosthesis or resin filling, finishing cutting or polishing after crown fixing, inlay filling, or resin filling, removal of a filled prosthesis or composite resin, and so on. Depending on each of these purposes of use, an appropriate type of dental handpiece 20 and bur 30 is selected and used. The dental handpiece 20 and the bur 30 will be described in detail later.

<<Display unit>>

The display unit 6e includes a monitor or the like and displays an image to be shown to the doctor based on a control signal from a control unit 120 (see FIG. 4) described below.

<<Operation unit>>

The operation unit 6f includes buttons, a touch panel, and so on, and outputs a control signal based on a (manual) operation by the doctor to the control unit 120 (see FIG. 4) described below.

<Second Support Section>

As shown in FIG. 1, the second support section 7 supports the assistant table 8 so that the assistant table 8 can be moved around the chair module 3. The second support section 7 includes arms 7a and 7b provided in series. One end (base end) of the arm 7a is coupled to the casing of the base unit 4 via a joint and the other end (tip end) of the arm 7a is coupled to the arm 7b via a joint. One end (base end) of the arm 7b is coupled to the arm 7a via the joint and the other end (tip end) of the arm 7b is coupled to the assistant table 8 via a joint.

<Assistant Table>

The assistant table 8 is used by an assistant (dental assistant) as a user. The assistant table 8 includes a table 8a, a hanger 8b, and multiple sets of hoses 8c, attachments 8d, and instruments 40.

<<Table>>

The table 8a is a place for placing items and others necessary for the assistant to assist the dental treatment.

<<Hanger>>

The hanger 8b is a place for hanging and holding the instruments 40 attached to the attachments 8d.

<<Hose>>

Each hose 8c is configured through which compressed gas (for example, compressed air) and/or water to be supplied to the instrument 40 and the compressed gas discharged from the instrument 40 can flow.

<<Attachment>>

Each attachment 8d is a metal member attached to the tip end of the hose 8c, and is configured to allow the instrument 40 to be attached to and detached from the attachment 8d.

<<Instrument>>

Each instrument 40 is a tool to be grasped by the assistant and used to assist a dental treatment (such as suction) for a patient. The instruments 40 are a vacuum tip, a syringe, and so on.

<Foot Controller>

The foot controller 9 is an operation unit to be manipulated by an operation (such as stepping) by a foot of the doctor. The foot controller 9 outputs a control signal according to an operation result by the doctor to the control unit 120 (an on-off valve control unit 122) described below.

<Dental Handpiece Control System>

As shown in FIGs. 3 and 4, the dental handpiece control system 2 is a system to control the pressure of compressed gas to be supplied to the dental handpiece. The dental handpiece control system 2 includes the dental handpiece 20 and the bur 30 (see FIG. 2), a compressed gas source 50, a supply gas passage 60, an exhaust gas passage 70, an on-off valve 80, a proportional valve 90, a placement detection unit 100, an exhaust gas pressure detection unit 110, and the control unit 120.

<Dental Handpiece>

As shown in FIG. 2, the dental handpiece 20 is detachably attached to the attachment 6d and is to be grasped and operated by a doctor for cutting a patient's tooth. As shown in FIG. 3, the dental handpiece 20 includes, as compressed gas passages, an intra-piece supply gas passage 21, a turbine chamber 22, and an intra-piece exhaust gas passage 23 arranged in this order from an upstream side to a downstream side.

The dental handpiece 20 includes turbine blades 24 as a member to convert the pressure of the compressed gas to a rotational force. The turbine blades 24 are disposed inside the turbine chamber 22 and are rotatably supported by a shaft and a bearing, which are not shown.

In the dental handpiece 20, most of the compressed gas supplied to the turbine chamber 22 from the intra-piece supply gas passage 21 is discharged to the intra-piece exhaust gas passage 23. Meanwhile, a portion of the compressed gas supplied to the turbine chamber 22 is discharged to the outside of the dental handpiece 20 from the turbine chamber 22 formed in a head portion of the dental handpiece 20.

In other words, the following relationship regarding the pressure of the compressed gas holds. [Supply Gas Pressure] $\approx$ [Exhaust Gas Pressure] + [Head Exhaust Gas Pressure]

The supply gas pressure is the pressure of the compressed gas flowing in the supply gas passage 60 (intra-piece supply gas passage 21). The exhaust gas pressure is the pressure of the compressed gas flowing in the exhaust gas passage 70 (intra-piece exhaust gas passage 23). The head exhaust gas pressure is the pressure of the compressed gas discharged from the turbine chamber 22 not to the exhaust gas passage 70 but to the outside of the dental handpiece 20.

<Bur>

As shown in FIG. 2, the bur 30 is a tool for actually cutting a patient's tooth, and is detachably attached to the dental handpiece 20 so that the bur 30 can rotate together with the turbine blades 24 (see FIG. 3).

<Compressed Gas Source>

As shown in FIG. 3, the compressed gas source 50 is a tank that stores the compressed gas (for example, compressed air), which is a power source of the turbine blades 24, an air compressor that generates the compressed gas by compressing the gas, or the like.

<Supply Gas Passage>

The supply gas passage 60 is a passage for supplying the compressed gas stored in the compressed gas source 50 to the dental handpiece 20. The supply gas passage 60 includes an upstream supply gas passage 61, a passage switching unit 62, and multiple sets of downstream supply gas passages 63 and intra-piece supply gas passages 21, which are arranged in this order from the upstream side (compressed gas source 50 side) to the downstream side (dental handpiece 20 side).

<<Upstream Supply Gas Passage>>

The upstream supply gas passage 61 is (partly) arranged inside the base unit 4 and the first support section 5 (see FIG. 1). One end (upstream end) of the upstream supply gas passage 61 is connected to the compressed gas source 50, and the other end (downstream end) of the upstream supply gas passage 61 is connected to the passage switching unit 62.

<<Passage Switching Unit>>

The passage switching unit 62 is arranged inside a casing of the treatment table 6 (see FIG. 1). The passage switching unit 62 includes a valve block having a pipeline branching from the upstream supply gas passage 61 to the multiple downstream supply gas passages 63, and multiple control valves provided at branched portions of the valve block. Each of the control valves is a solenoid valve switchable between an opened state and a closed state based on a control signal from the control unit 120.

<<Downstream Supply Gas Passage>>

Each of the downstream supply gas passages 63 is arranged inside the hose 6c and the attachment 6d (see FIG. 2).

<Exhaust Gas Passage>

The exhaust gas passage 70 is a passage for discharging the compressed gas after rotating the turbine blades 24 (see FIG. 2) of the dental handpiece 20 to the outside. The exhaust gas passage 70 includes multiple sets of intra-piece exhaust gas passages 23 and upstream exhaust gas passages 71, a passage integration unit 72, and a downstream exhaust gas passage 73.

<<Upstream Exhaust Gas Passage>>

Each of the upstream exhaust gas passages 71 is provided inside the hose 6c and the attachment 6d (see FIG. 2).

<<Passage Integration Unit>>

The passage integration unit 72 is provided inside the casing of the treatment table 6 (see FIG. 1). The passage integration unit 72 includes a valve block having a pipeline integrating the multiple upstream exhaust gas passages 71 into the downstream exhaust gas passage 73, and multiple check valves provided at unintegrated portions of the valve block. Each of the check valves is a one-way valve that allows the compressed gas to flow from the upstream side to the downstream side and prohibits the compressed gas from flowing from the downstream side to the upstream side.

<<Downstream Exhaust Gas Passage>>

The downstream exhaust gas passage 73 is (partly) arranged inside the first support section 5 and the base unit 4 (see FIG. 1). One end (upstream end) of the downstream exhaust gas passage 73 is connected to the passage integration unit 72, and the other end (downstream end) of the downstream exhaust gas passage 73 is exposed from the first support section 5 (see FIG. 1). Thus, the downstream exhaust gas passage 73 is configured to be capable of discharging the compressed gas to the outside.

<On-Off Valve>

The on-off valve 80 is a normally-closed solenoid valve arranged in a gas outlet of the compressed gas source 50 or in the upstream supply gas passage 61. The on-off valve 80 is configured to be switchable between a closed state where the on-off valve 80 prohibits the compressed gas from flowing and an opened state where the on-off valve 80 allows the compressed gas to flow.

<Proportional Valve>

The proportional valve 90 is a solenoid valve arranged at a portion downstream of the on-off valve 80 in the upstream supply gas passage 61 or a portion upstream of a branching point where the passage branches in the passage switching unit 62. The proportional valve 90 is arranged inside the casing of the treatment table 6 (see FIG. 1). The proportional valve 90 is configured to be capable of modifying, in a stepless manner, an opening ratio of the passage through which the compressed gas flows (the opening ratio is the ratio of an opening area of a valve body moved by a certain amount to a total opening area of the valve body in the cross-sectional area of the passage viewed from the flow direction of the compressed gas). In the initial state, the proportional valve 90 is set in an appropriate opened state where the compressed gas can flow.

<Placement Detection Unit>

As shown in FIG. 4, the placement detection unit 100 is a sensor to detect whether the dental handpiece 20 (see FIG. 1) is placed (hung) on the hanger 6b (see FIG. 1) or not (removed from the hanger 6b). The placement detection unit 100 detects whether each of the multiple dental handpieces 20 is placed or removed. The placement detection unit 100 outputs a detection result to the control unit 120.

<Exhaust Gas Pressure Detection Unit>

The exhaust gas pressure detection unit 110 is a sensor to detect the exhaust gas pressure, which is the pressure of the compressed gas flowing in the exhaust gas passage 70 (the downstream exhaust gas passage 73 in the present embodiment) (see FIG. 3). The exhaust gas pressure detection unit 110 outputs a detection result (exhaust gas pressure) to the control unit 120. The exhaust gas pressure detection unit 110 is arranged inside the casing of the treatment table 6 (see FIG. 1).
In the present embodiment, the exhaust gas pressure detection unit 110 is a semiconductor sensor equipped with a Wheatstone bridge circuit constructed using multiple strain gauges formed of piezoresistors. This semiconductor sensor detects the exhaust gas pressure by converting electrical resistance changes in the Wheatstone bridge circuit into voltage changes and measuring them. The exhaust gas pressure detection unit 110 is not limited to the semiconductor sensor. Any type of pressure sensor capable of detecting the exhaust gas pressure, such as a metal thin film type, a capacitive type, an optical fiber type, and a vibration type, may be used as the exhaust gas pressure detection unit 110.

<Control Unit>

The control unit 120 includes an electric circuit and/or a central processing unit (CPU), a read-only memory (ROM), a random access memory (RAM), an input/output circuit, and so on. The control unit 120 includes, as functional units, a storage unit 121, the on-off valve control unit 122, a control valve control unit 123, an exhaust gas pressure time characteristic calculation unit 124, a determination unit 125, a target exhaust gas pressure setting unit 126, a comparison unit 127, and a proportional valve control unit 128.

<<Storage Unit>>

The storage unit 121 stores a type and normality determination database 121a and a malfunction identification database 121b. The storage unit 121 also stores a target exhaust gas pressure database 121c.

<<Type And Normality Determination Database>>

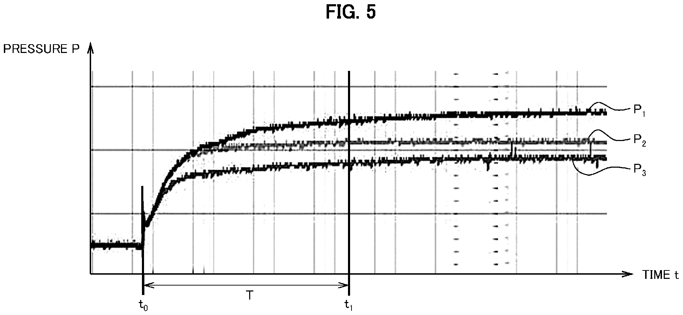

The type and normality determination database 121a is a database for use to determine a type of dental handpiece 20 being supplied with the compressed gas and discharging the compressed gas. The type and normality determination database 121a is the database also for use to determine whether the dental handpiece 20 being supplied with the compressed gas and discharging the compressed gas is normal (whether a malfunction occurs). In the type and normality determination database 121a, each type of dental handpiece 20 and a time characteristic of the exhaust gas pressure in that type of dental handpiece 20 in the normal state are stored in association with each other. In the type and normality determination database 121a, the time characteristic of the exhaust gas pressure is (a lower limit value and an upper limit value of) an integral value of the exhaust gas pressure from the start of rotation of the turbine blades 24 to a time point when a predetermined time T has passed, (a lower limit value and an upper limit value) of the exhaust gas pressure at the time point when the predetermined time T has passed, a graph presenting time-course fluctuations in the exhaust gas pressure (a graph presenting the lower limit value and a graph presenting the upper limit value), or the like.
Here, the dental handpiece 20 from the start of rotation of the turbine blades 24 to the time point when the predetermined time T has passed is in a so-called no-load rotation state where the dental handpiece 20 is not pressed against a patient's tooth and receives no load.
As shown in FIG. 5, a graph presenting time-course fluctuations in an exhaust gas pressure $P_1$ in a type 1 of dental handpiece 20, a graph presenting time-course fluctuations in an exhaust gas pressure $P_2$ in a type 2 of dental handpiece 20, and a graph presenting time-course fluctuations of an exhaust gas pressure $P_3$ in a type 3 of dental handpiece 20 show curves different from each other. In the present embodiment, in the type and normality determination database 121a, for each type of dental handpiece 20, the integral value of the

exhaust gas pressure $P_1$, $P_2$, or $P_3$ from the start of rotation (time point $t_0$) to a time point (time point $t_1$) when the predetermined time T has passed is stored as the time characteristic of the exhaust gas pressure for determining the type of dental handpiece 20. Alternatively, in the type and normality determination database 121a, for each type of dental handpiece 20, the values of the exhaust gas pressure $P_1$, $P_2$, or $P_3$ from the start of rotation (time point $t_0$) to the time point (time point $t_1$) when the predetermined time T has passed are stored as the time characteristic of the exhaust gas pressure for determining the type of dental handpiece 20.

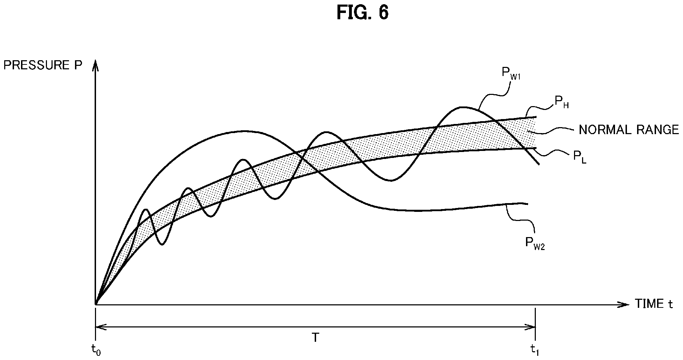

As shown in FIG. 6, in the type and normality determination database 121a, for each type of dental handpiece 20, a graph presenting time-course fluctuations in the lower limit value $P_L$ of the exhaust gas pressure and a graph presenting time-course fluctuations in the upper limit value $P_H$ of the exhaust gas pressure from the start of rotation (time point $t_0$) to the time point (time point $t_1$) when the predetermined time T has passed are stored as the time characteristic of the exhaust gas pressure for determining whether the dental handpiece 20 is normal.

<<Malfunction Identification Database>>

As shown in FIG. 4, the malfunction identification database 121b is a database for use to identify a type of malfunction in the dental handpiece 20 being supplied with the compressed gas and discharging the compressed gas. In the malfunction identification database 121b, each type of malfunction that may occur in the dental handpiece 20 and the time characteristic of the exhaust gas pressure in the dental handpiece 20 if that type of malfunction were occurring are stored in association with each other. In the malfunction identification database 121b, the time characteristic of the exhaust gas pressure is a graph presenting time-course fluctuations in the exhaust gas pressure.

As shown in FIG. 6, in the malfunction identification database 121b, for each type of malfunction, a graph presenting time-course fluctuations in the exhaust gas pressure $P_{W1}$ or $P_{W2}$ from the start of rotation (time point $t_0$) to the time point (time point $t_1$) when the predetermined time T has passed is stored as the time characteristic of the exhaust gas pressure for identifying the type of malfunction in the dental handpiece 20. Although FIG. 6 shows two graphs as the time-course fluctuations in the exhaust gas pressures $P_{W1}$ and $P_{W2}$ for the respective types of malfunctions, the number of graphs is not limited to two.

The predetermined time T is set to a time (for example, 400 to 600 ms) that passes after the on-off valve 80 is opened at the time point $t_0$ and before a time point when the exhaust gas pressure reaches a target exhaust gas pressure initial value while the proportional valve 90 is not subjected to feedback control using a target exhaust gas pressure (target exhaust gas pressure initial value) but is kept at a predetermined opening ratio (for example, an opening ratio at a control initial stage in the feedback control using the target exhaust gas pressure initial value).

<<Target Exhaust Gas Pressure Database>>

As shown in FIG. 4, the target exhaust gas pressure database 121c is a database that holds, for each type of dental handpiece 20, the target exhaust gas pressure, which is a target of the exhaust gas pressure detected by the exhaust gas pressure detection unit 110. In the target exhaust gas pressure database 121c, the target exhaust gas pressure initial value, which is a target exhaust gas pressure at the start of control, is stored for each type of dental handpiece 20. In the target exhaust gas pressure database 121c, multiple target exhaust gas pressures are stored for each type of dental handpiece 20 as target exhaust gas pressures each of which can be selected and set by an operation (manual operation) by the doctor. These multiple target exhaust gas pressures are higher than the target exhaust gas pressure initial value.

The target exhaust gas pressure may include a lower limit value and an upper limit value of the target exhaust gas pressure.

Regarding the target exhaust gas pressure initial value, a rotational speed (for example, 200,000 rpm, 300,000 rpm, or 400,000 rpm) of the turbine blades 24 (see FIG. 3) approximately corresponding to the target exhaust gas pressure initial value may be stored in association with the target exhaust gas pressure initial value or may be displayed on the display unit 6e.

In addition, in the target exhaust gas pressure database 121c, for automatic control for each type of dental handpiece 20, a range of fluctuation (absolute value) and a direction of fluctuation (increase or decrease) in the exhaust gas pressure from the steady-state exhaust gas pressure, as well as an amount of modification and a direction of modification (increase or decrease) in the target exhaust gas pressure may be stored in association with each other in a table format or the like.

<<On-Off Valve Control Unit>>

The on-off valve control unit 122 obtains a control signal (operation result) from the foot controller 9 (see FIG. 1) and controls the on-off valve 80 based on the operation result. The on-off valve control unit 122 opens the on-off valve 80 when the doctor steps on the foot controller 9, and closes the on-off valve 80 when the doctor releases the stepping-force on the foot controller 9.

<<Control Valve Control Unit>>

The control valve control unit 123 obtains a control signal (detection result) from the placement detection unit 100 built in the hanger 6b, and controls the control valve based on the detection result, so that the passage switching unit 62 allows the compressed gas to be supplied only to the dental handpiece 20 (see FIG. 1) that is removed from the hanger 6b and is grasped by the doctor.

<<Exhaust Gas Pressure Time Characteristic Calculation Unit>>

An exhaust gas pressure time characteristic calculation unit 124 obtains the exhaust gas pressure detected by the exhaust gas pressure detection unit 110, calculates the time characteristic of the obtained exhaust gas pressure, and outputs the calculation result to the determination unit 125. The time characteristic of the exhaust gas pressure is the integral value of the exhaust gas pressure during the predetermined time T after the start of supply of the compressed gas to the dental handpiece 20 (see FIG. 2), the value of the exhaust gas pressure at the end of the predetermined time T, a graph presenting the time-course fluctuations in the exhaust gas pressure during the predetermined time T, or the like.

In a learning stage of the type and normality determination database 121a, the exhaust gas pressure time characteristic calculation unit 124 calculates the time characteristic of the exhaust gas pressure in a state where a known type of dental handpiece 20 (see FIG. 2) in the normal state is attached to the attachment 6d (see FIG. 2). The exhaust gas pressure time characteristic calculation unit 124 stores each type of dental handpiece 20 and the time characteristic of the exhaust gas pressure of that type in the type and normality determination database 121a while associating them with each other. Here, the exhaust gas pressure time characteristic calculation unit 124 may obtain the type of dental handpiece 20 based on an operation result on the operation unit 6f by the doctor or the like.

In a learning stage of the malfunction identification database 121b, the exhaust gas pressure time characteristic calculation unit 124 calculates the time characteristic of the exhaust gas pressure in a state where a dental handpiece 20 (see FIG. 2) having each known type of malfunction is attached to the attachment 6d (see FIG. 2). The exhaust gas pressure time characteristic calculation unit 124 stores each type of malfunction and the time characteristic of the exhaust gas pressure of the dental handpiece 20 in the malfunction identification database 121b while associating them with each other. Here, the exhaust gas pressure time characteristic calculation unit 124 may obtain the type of malfunction based on an operation result on the operation unit 6f by the doctor or the like.

<<Determination Unit>>

The determination unit 125 obtains the time characteristic of the exhaust gas pressure calculated by the exhaust gas pressure time characteristic calculation unit 124, and compares the obtained time characteristic of the exhaust gas pressure and the time characteristic of the exhaust gas pressure stored in the storage unit 121, thereby determining a type and/or a malfunction of the dental handpiece 20 (see FIG. 2). The determination unit 125 outputs the determination result of the type and/or the malfunction of the dental handpiece 20 to the display unit 6e and causes the display unit 6e to display the determination result.

In the case where the calculated time characteristic of the exhaust gas pressure matches the time characteristic stored in the type and normality determination database 121a (or falls between the lower limit value and the upper limit value thereof), the determination unit 125 determines that the type associated with the matching time characteristic is the type of dental handpiece 20 currently in use.

In the case where the calculated time characteristic of the exhaust gas pressure (here, the graph presenting the time-course fluctuations) during the predetermined time T falls (always falls in the present embodiment) between the lower limit value $P_L$ and upper limit value $P_H$ of the time characteristic stored in the type and normality determination database 121a, the determination unit 125 determines that the dental handpiece 20 currently in use is normal. On the other hand, in the case where the calculated time characteristic of the exhaust gas pressure (here, the graph presenting the time-course fluctuations) during the predetermined time T falls (even temporarily falls, in the present embodiment) outside the range between the lower limit value $P_L$ and the upper limit value $P_H$ of the time characteristic stored in the type and normality determination database 121a, the determination unit 125 determines that the dental handpiece 20 currently in use is abnormal (a malfunction is occurring).

If determining that a malfunction is occurring in the dental handpiece 20 currently in use, the determination unit 125 identifies the type of malfunction by comparing the calculated time characteristic of the exhaust gas pressure (here, the graph presenting the time-course fluctuations) during the predetermined time T and the time characteristic of the exhaust gas pressure stored in the malfunction identification database 121b.

<<Target Exhaust Gas Pressure Setting Unit>>

A target exhaust gas pressure setting unit 126 sets the target exhaust gas pressure, which is a target value of the exhaust gas pressure detected by the exhaust gas pressure detection unit 110, and outputs the set target exhaust gas pressure to the comparison unit 127.

In a manual operation, the target exhaust gas pressure setting unit 126 can set one target exhaust gas pressure selected from the multiple target exhaust gas pressures stored in advance in the target exhaust gas pressure database 121c as the target exhaust gas pressure for the feedback control.

Moreover, in an automatic control, the target exhaust gas pressure setting unit 126 can calculate an amount of modification and a direction of modification (increase or decrease) in the target exhaust gas pressure based on the range of fluctuation (absolute value) and the direction of fluctuation (increase or decrease) in the exhaust gas pressure from the steady-state exhaust gas pressure. In this case, the target exhaust gas pressure setting unit 126 can calculate a new target exhaust gas pressure by assigning the steady-state target exhaust gas pressure and the calculated amount of modification and the calculated direction of modification (increase or decrease) in the target exhaust gas pressure into a preset formula, and reset the target exhaust gas pressure for the feedback control to the calculated target exhaust gas pressure.

In the automatic control, the target exhaust gas pressure setting unit 126 can refer to the target exhaust gas pressure database 121c using the range of fluctuation (absolute value) and the direction of fluctuation (increase or decrease) in the exhaust gas pressure from the steady-state exhaust gas pressure, thereby reading the amount of modification and the direction of modification (increase or decrease) in the target exhaust gas pressure corresponding to the range of fluctuation (absolute value) and the direction of fluctuation (increase or decrease) in the exhaust gas pressure from the steady-state exhaust gas pressure. In this case, the target exhaust gas pressure setting unit 126 can calculate a new target exhaust gas pressure based on the steady-state exhaust gas pressure and the read amount of modification and the read direction of modification (increase or decrease) in the target exhaust gas pressure, and reset the target exhaust gas pressure for the feedback control to the calculated target exhaust gas pressure.

<<Comparison Unit>>

The comparison unit 127 obtains the target exhaust gas pressure set by the target exhaust gas pressure setting unit 126 and the exhaust gas pressure detected by the exhaust gas pressure detection unit 110 and compares the target exhaust gas pressure and the exhaust gas pressure thus obtained. More specifically, the comparison unit 127 calculates, as a comparison result, a difference between the exhaust gas pressure and the target exhaust gas pressure (exhaust gas pressure - target exhaust gas pressure), and outputs the calculated comparison result (difference) to the proportional valve control unit 128.

<<Proportional Valve Control Unit (Supply Gas Pressure Control Unit)>>

The proportional valve control unit 128 is an example of a supply gas pressure control unit to control the supply gas pressure, which is the pressure of the compressed gas to be supplied to the turbine blades 24. The proportional valve control unit 128 obtains the comparison result by the comparison unit 127 and controls the proportional valve 90 based on the obtained comparison result. Controlling the proportional valve 90, the proportional valve control unit 128 modifies the supply gas pressure, which is the pressure of the compressed gas to be supplied to the dental handpiece 20, and equalizes the exhaust gas pressure detected by the exhaust gas pressure detection unit 110 to the target exhaust gas pressure. When the exhaust gas pressure detected by the exhaust gas pressure detection unit 110 is lower than the target exhaust gas pressure (exhaust gas pressure - target exhaust gas pressure < 0), the proportional valve control unit 128 increases the opening amount of the proportional valve 90 to increase (raise) the supply gas pressure and the exhaust gas pressure, so that the exhaust gas pressure is brought close to and equalized to the target exhaust gas pressure. When the exhaust gas pressure detected by the exhaust gas pressure detection unit 110 is higher than the target exhaust gas pressure (exhaust gas pressure - target exhaust gas pressure > 0), the proportional valve control unit 128 decreases the opening amount of the proportional valve 90 to decrease (lower) the supply gas pressure and the exhaust gas pressure, so that the exhaust gas pressure is brought close to and equalized to the target exhaust gas pressure.

In other words, the target exhaust gas pressure setting unit 126, the comparison unit 127, and the proportional valve control unit 128 constitute a feedback control unit to perform the feedback control on the proportional valve 90 based on the exhaust gas pressure detected by the exhaust gas pressure detection unit 110.

The proportional valve control unit 128 also controls the supply gas pressure depending on the type of dental handpiece 20 determined by the determination unit 125. In the present embodiment, the target exhaust gas pressure setting unit 126 manually or automatically sets the target exhaust gas pressure depending on the type of dental handpiece 20 determined by the determination unit 125, and the proportional valve control unit 128 controls the supply gas pressure based on the target exhaust gas pressure.

<Setting of Target Exhaust Gas Pressure and Feedback Control of Proportional valve at Control Initial Stage>

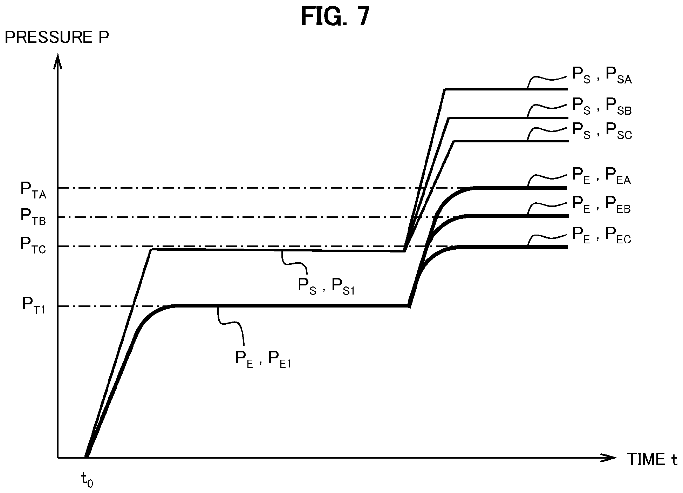

As shown in FIG. 7, at the start of control, the target exhaust gas pressure setting unit 126 reads a target exhaust gas pressure initial value $P_{T1}$ associated with a type of dental handpiece 20 in use, from the target exhaust gas pressure database 121c. The target exhaust gas pressure setting unit 126 sets the read target exhaust gas pressure initial value $P_{T1}$ as the target exhaust gas pressure.

The comparison unit 127 compares an exhaust gas pressure $P_E$ detected by the exhaust gas pressure detection unit 110 and the target exhaust gas pressure initial value $P_{T1}$, and outputs the comparison result to the proportional valve control unit 128. The proportional valve control unit 128 controls the proportional valve 90 based on the comparison result so that the detected exhaust gas pressure $P_E$ will be equalized to the target exhaust gas pressure initial value $P_{T1}$. Here, with the control on the proportional valve 90, the supply gas pressure $P_S$ is changed over time to a value greater than the value of the exhaust gas pressure $P_E$ by just the head exhaust gas pressure. In other words, in the state where the exhaust gas pressure $P_E$ is equalized to the target exhaust gas pressure initial value $P_{T1}$ ($P_E = P_{E1} = P_{T1}$), the value of the supply gas pressure $P_S$ is greater than the value of the exhaust gas pressure $P_{E1}$ by just the head exhaust gas pressure ($P_S = P_{S1}$).

<Setting of Target Exhaust Gas Pressure and Feedback Control of Proportional Valve based on Operation (Manual Operation)>

The target exhaust gas pressure setting unit 126 switches, based on an operation result on the operation unit 6f by the doctor, the method of setting the target exhaust gas pressure between an operation-based method and an automatic method. In the operation-based setting of the target exhaust gas pressure, the target exhaust gas pressure setting unit 126 reads the multiple target exhaust gas pressures associated with the type of the dental handpiece 20 in use from the target exhaust gas pressure database 121c stored in advance in the storage unit 121 and causes the display unit 6e to display the multiple target exhaust gas pressures thus read. The target exhaust gas pressure setting unit 126 selects one target exhaust gas pressure from the multiple target exhaust gas pressures ($P_{TA}$, $P_{TB}$, and $P_{TC}$) based on an operation result on the operation unit 6f by the doctor viewing the display unit 6e, and sets the selected target exhaust gas pressure as the target exhaust gas pressure for the feedback control. As described above, the target exhaust gas pressure setting unit 126 may be configured to cause the display unit 6e to display the rotational speeds (for example, 200,000 rpm, 300,000 rpm, and 400,000 rpm) of the turbine blades 24 (see FIG. 3) stored in association with the initial values of target exhaust gas pressures. In this case, the target exhaust gas pressure setting unit 126 sets the target exhaust gas pressure associated with the selected rotational speed as the target exhaust gas pressure for the feedback control.

The comparison unit 127 compares the exhaust gas pressure $P_E$ detected by the exhaust gas pressure detection unit 110 and the target exhaust gas pressure (any of $P_{TA}$, $P_{TB}$, and $P_{TC}$), and outputs the comparison result to the proportional valve control unit 128. Based on the comparison result, the proportional valve control unit 128 controls the proportional valve 90 so that the detected exhaust gas pressure $P_E$ will be equalized to the target exhaust gas pressure (any of $P_{TA}$, $P_{TB}$, and $P_{TC}$). Here, with the control on the proportional valve 90, the supply gas pressure $P_S$ is changed over time to a value greater than the value of the exhaust gas pressure $P_E$ by just the head exhaust gas pressure.

The following relationships hold among the exhaust gas pressure $P_{EA}$ and the supply gas pressure $P_{SA}$ in a state controlled based on the target exhaust gas pressure $P_{TA}$, the exhaust gas pressure $P_{EB}$ and the supply gas pressure $P_{SB}$ in a state controlled based on the target exhaust gas pressure $P_{TB}$, and the exhaust gas pressure $P_{EC}$ and the supply gas pressure $P_{SC}$ in a state controlled based on the target exhaust gas pressure $P_{TC}$.

$$P_{TA} > P_{TB} > P_{TC}$$

$$P_{EA} > P_{EB} > P_{EC}$$

$$P_{SA} > P_{SB} > P_{SC}$$

<Automatic Setting of Target Exhaust Gas Pressure and Feedback Control on Proportional Valve>

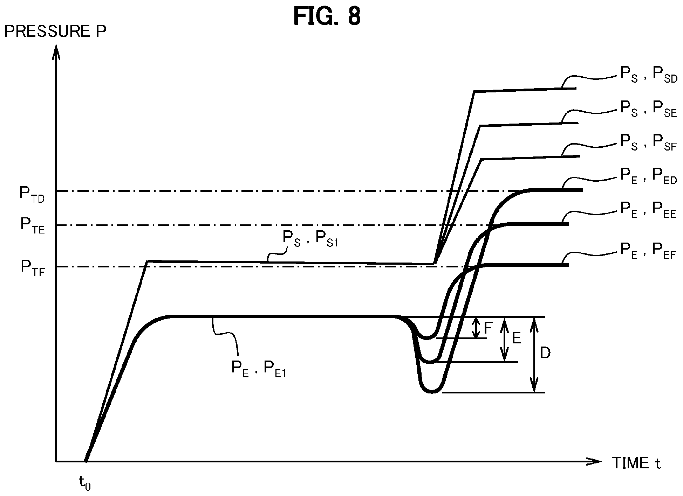

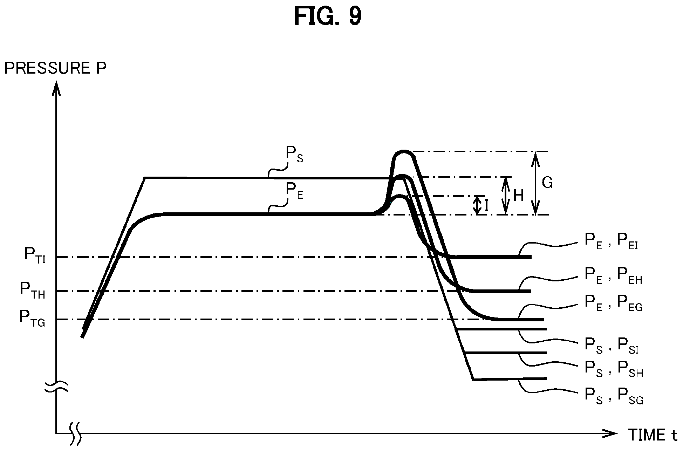

As shown in FIGs. 8 and 9, in the automatic setting of the target exhaust gas pressure, in the case where the exhaust gas pressure $P_E$ fluctuates from the steady-state value, the target exhaust gas pressure setting unit 126 resets the target exhaust gas pressure based on the range of fluctuation in the exhaust gas pressure $P_E$. The method of setting the new target exhaust gas pressure may be the method using the preset formula or the method using the target exhaust gas pressure database 121c as described above.

Here, the exhaust gas pressure detection unit 110 periodically (for example, every several tens ms) detects and outputs the exhaust gas pressure $P_E$. The control unit 120 executes control every time the control unit 120 obtains the exhaust gas pressure $P_E$. In the case where the obtained exhaust gas pressure $P_E$ has the same value (or falls within the range between the lower limit value and the upper limit value of the target exhaust gas pressure) a predetermined number of times, the control unit 120 (target exhaust gas pressure setting unit 126) determines that the exhaust gas pressure $P_E$ is in the steady state. In the case where the obtained exhaust gas pressure $P_E$ fluctuates from the steady-state value (or falls outside the range between the lower limit value and the upper limit value of the target exhaust gas pressure), the control unit 120 (target exhaust gas pressure setting unit 126) determines that the exhaust gas pressure $P_E$ fluctuates from the steady-state value and resets the target exhaust gas pressure.

As shown in FIG. 8, in the case where the doctor increases the pressure of the dental handpiece 20 against a tooth, the load acting on the dental handpiece 20 (turbine blades 24) increases and the exhaust gas pressure $P_E$ decreases. In the case where the exhaust gas pressure $P_E$ becomes lower than (is decreased from) the steady-state value, the target exhaust gas pressure setting unit 126 resets the target exhaust gas pressure so that the greater the range of fluctuation (absolute value) in the exhaust gas pressure $P_E$, the higher the target exhaust gas pressure.

The comparison unit 127 compares the exhaust gas pressure $P_E$ detected by the exhaust gas pressure detection unit 110 and the target exhaust gas pressure, and outputs the comparison result to the proportional valve control unit 128. Based on the comparison result, the proportional valve control unit 128 controls the proportional valve 90 so that the detected exhaust gas pressure $P_E$ will be equalized to the target exhaust gas pressure. Here, with the control on the proportional valve 90, the supply gas pressure $P_S$ is changed over time to a value greater than the value of the exhaust gas pressure $P_E$ by just the head exhaust gas pressure.

The following relationships hold among a range of fluctuation D (absolute value) in the exhaust gas pressure $P_E$, the target exhaust gas pressure $P_{TD}$ set based on the range of fluctuation D, the exhaust gas pressure $P_{ED}$ and the supply gas pressure $P_{SD}$ in a state controlled based on the target exhaust gas pressure $P_{TD}$, a range of fluctuation E (absolute value) in the exhaust gas pressure $P_E$, the target exhaust gas pressure $P_{TE}$ set based on the range of fluctuation E, the exhaust gas pressure $P_{EE}$ and the supply gas pressure $P_{SE}$ in a state controlled based on the target exhaust gas pressure $P_{TE}$, a range of fluctuation F (absolute value) in the exhaust gas pressure $P_E$, the target exhaust gas pressure $P_{TF}$ set based on the range of fluctuation F, the exhaust gas pressure $P_{EF}$ and the supply gas pressure $P_{SF}$ in a state controlled based on the target exhaust gas pressure $P_{TF}$.

$$D > E > F$$

$$P_{TD} > P_{TE} > P_{TF}$$

$$P_{ED} > P_{EE} > P_{EF}$$

$$P_{SD} > P_{SE} > P_{SF}$$

As shown in FIG. 9, in the case where the doctor decreases the pressure of the dental handpiece 20 against the tooth, the load acting on the dental handpiece 20 (turbine blades 24) decreases and the exhaust gas pressure $P_E$ increases. In the case where the exhaust gas pressure $P_E$ becomes higher than (is increased from) the steady-state value, the target exhaust gas pressure setting unit 126 resets the target exhaust gas pressure so that the greater the range of fluctuation (absolute value) in the exhaust gas pressure $P_E$, the lower the target exhaust gas pressure.

The comparison unit 127 compares the exhaust gas pressure $P_E$ detected by the exhaust gas pressure detection unit 110 and the target exhaust gas pressure, and outputs the comparison result to the proportional valve control unit 128. Based on the comparison result, the proportional valve control unit 128 controls the proportional valve 90 so that the detected exhaust gas pressure will be equalized to the target exhaust gas pressure. Here, with the control on the proportional valve 90, the supply gas pressure $P_S$ is changed over time to a value greater than the value of the exhaust gas pressure $P_E$ by just the head exhaust gas pressure.

The following relationships hold among a range of fluctuation G (absolute value) in the exhaust gas pressure $P_E$, the target exhaust gas pressure $P_{TG}$ set based on the range of fluctuation G, the exhaust gas pressure $P_{EG}$ and the supply gas pressure $P_{SG}$ in a state controlled based on the target exhaust gas pressure $P_{TG}$, a range of fluctuation H (absolute value) in the exhaust gas pressure $P_E$, the target exhaust gas pressure $P_{TH}$ set based on the range of fluctuation H, the exhaust gas pressure $P_{EH}$ and the supply gas pressure $P_{SH}$ in a state controlled based on the target exhaust gas pressure $P_{TH}$, a range of fluctuation I (absolute value) in the exhaust gas pressure $P_E$, the target exhaust gas pressure $P_{TI}$ set based on the range of fluctuation I, the exhaust gas pressure $P_{EI}$ and the supply gas pressure $P_{SI}$ in a state controlled based on the target exhaust gas pressure $P_{TI}$.

$$G > H > I$$

$$P_{TG} < P_{TH} < P_{TI}$$

$$P_{EG} < P_{EH} < P_{EI}$$

$$P_{SG} < P_{SH} < P_{SI}$$

In FIG. 9, with priority given to ease of understanding of graphs, the supply gas pressures $P_{SG}$, $P_{SH}$, and $P_{SI}$ are plotted at positions lower than those of the respective exhaust gas pressures $P_{EG}$, $P_{EH}$, and $P_{EI}$. However, actually, the supply gas pressure $P_{SG}$ is higher than the exhaust gas pressure $P_{EG}$, the supply gas pressure $P_{SH}$ is higher than the exhaust gas pressure $P_{EH}$, and the supply gas pressure $P_{SI}$ is higher than the exhaust gas pressure $P_{EI}$.

<Operation Example>

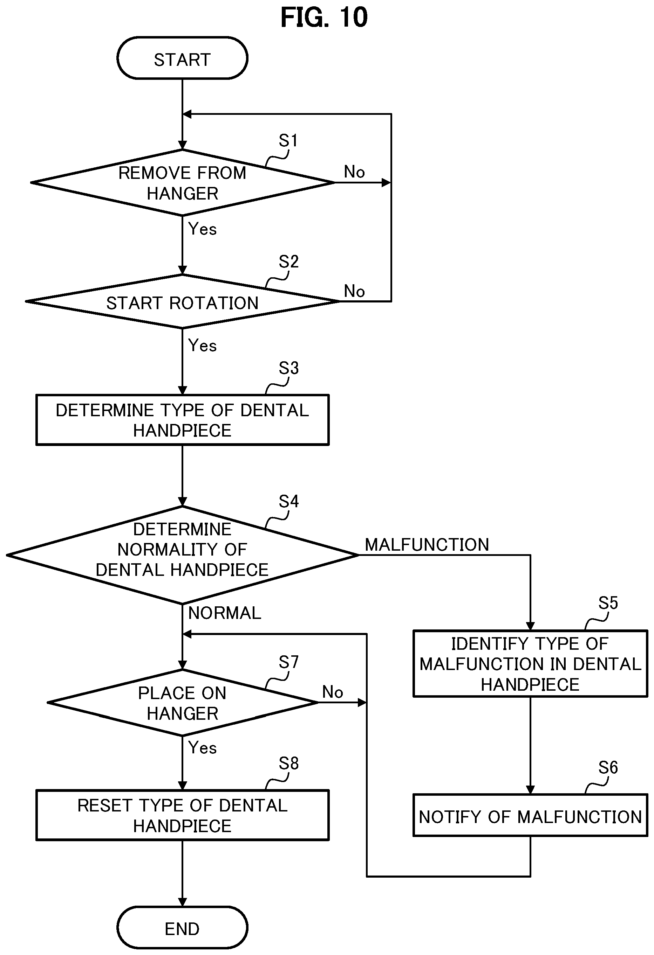

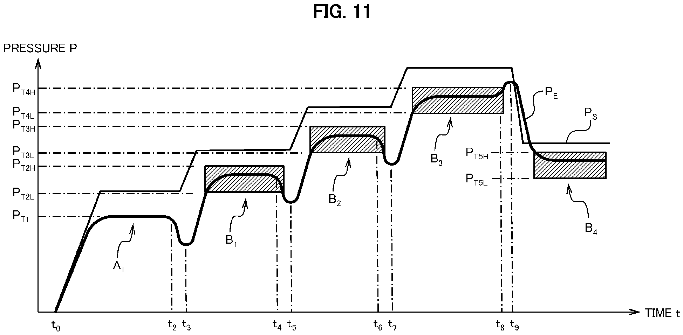

Next, an operation example of the dental handpiece control system 2 according to the embodiment of the present invention will be described with reference to a flowchart in FIG. 10 and a graph in FIG. 11, together with an example of use of the dental handpiece 20 by the doctor (see FIGs. 1 to 4 as needed).

As shown in FIG. 10, the doctor grasps the dental handpiece 20 and removes it from the hanger 6b, the control valve control unit 123 controls the control valve of the passage switching unit 62 based on the detection result by the placement detection unit 100 (Yes in step S1). According to this control, the passage switching unit 62 is enabled to feed the compressed gas to the dental handpiece 20 removed from the hanger 6b and disabled from feeding the compressed gas to the other dental handpieces 20 placed on the hanger 6b.

Subsequently, when the doctor steps on the foot controller 9, the on-off valve control unit 122 opens the on-off valve 80, and the proportional valve control unit 128 controls the opening amount of the proportional valve 90 so that the exhaust gas pressure $P_E$ detected by the exhaust gas pressure detection unit 110 will be equalized to the target exhaust gas pressure initial value $P_{T1}$. According to this control, the compressed gas flows through the supply gas passage 60, the turbine chamber 22, and the exhaust gas passage 70, and the turbine blades 24 and the bur 30 are rotated by the compressed gas and get ready to cut a patient's tooth (Yes in step S2). In this state, the dental handpiece 20 (the bur 30) is located away from the patient's tooth, and the turbine blades 24 are in the no-load rotation state, rotating without receiving any load from the patient's tooth for at least the time T.

Here, the exhaust gas pressure time characteristic calculation unit 124 calculates the time characteristic of the exhaust gas pressure $P_E$ in the no-load rotation state of the turbine blades 24 based on the exhaust gas pressure $P_E$ detected by the exhaust gas pressure detection unit 110.

The determination unit 125 determines the type of dental handpiece 20 in use by comparing the time characteristic of the exhaust gas pressure $P_E$ calculated by the exhaust gas pressure time characteristic calculation unit 124 and the time characteristic of the exhaust gas pressure $P_E$ stored in the type and normality determination database 121a (step S3).

Next, the determination unit 125 determines whether the dental handpiece 20 in use is normal (a malfunction occurs) by comparing the time characteristic of the exhaust gas pressure $P_E$ calculated by the exhaust gas pressure time characteristic calculation unit 124 and the time characteristic of the exhaust gas pressure $P_E$ stored in the type and normality determination database 121a in association with the type of dental handpiece 20 in use (step S4).

If determining in step S4 that a malfunction occurs in the dental handpiece 20 in use, the determination unit 125 identifies a type of the malfunction in the dental handpiece 20 in use by comparing the time characteristic of the exhaust gas pressure $P_E$ calculated by the exhaust gas pressure time characteristic calculation unit 124 and the time characteristic of the exhaust gas pressure $P_E$ stored in the malfunction identification database 121b (step S5). Then, the determination unit 125 causes the display unit 6e to display the identified type of the malfunction in the dental handpiece 20 (step S6).

In the case where the doctor places the dental handpiece 20 in use on the hanger 6b after the dental handpiece 20 in use is determined to be normal in step S4 or after step S6 is executed, the control valve control unit 123 returns the control valve of the passage switching unit 52 to its initial state based on the detection result by the placement detection unit 100 (Yes in step S7). Subsequently, the determination unit 125 resets the determination result of the type of dental handpiece 20 (step S8). In other words, the determination unit 125 keeps holding the determination result of the type of dental handpiece 20 until the placement detection unit 100 detects that the dental handpiece 20 is placed on the hanger 6b.

In addition, for a period after the dental handpiece 20 in use is determined to be normal in step S4 until the placement detection unit 100 detects that the dental handpiece 20 is placed on the hanger 6b in step S7, the target exhaust gas pressure setting unit 126, the comparison unit 127, and the proportional valve control unit 128 perform the feedback control on the proportional valve 90 as shown in FIG. 11. Here, in the case where the doctor selects the automatic control by operating the operation unit 6f, the target exhaust gas pressure setting unit 126 automatically resets the target exhaust gas pressure based on a change in the exhaust gas pressure $P_E$ from the steady-state value.

First, after a predetermined time passes in a state where the exhaust gas pressure $P_E$ detected by the exhaust gas pressure detection unit 110 is equal to the target exhaust gas pressure initial value $P_{T1}$, in other words, the so-called steady state ($A_1$ at an initial stage) is established, the doctor starts cutting a patient's tooth by pressing the dental handpiece 20 (and the bur 30) against the patient's tooth.

Here, if the doctor increases the pressure of the dental handpiece 20 (and the bur 30) against the patient's tooth, the load acting on the turbine blades 24 increases and accordingly the exhaust gas pressure (the exhaust gas pressure $P_E$ at a time point $t_3$, $t_5$, or $t_7$) detected by the exhaust gas pressure detection unit 110 becomes lower than (is decreased from) the steady-state exhaust gas pressure (the exhaust gas pressure $P_E$ at a time point $t_2$, $t_4$, or $t_6$). In this case, the target exhaust gas pressure setting unit 126 resets the target exhaust gas pressure so that the greater the range of fluctuation in the exhaust gas pressure (the absolute value of the amount of decrease), the higher the target exhaust gas pressure (the lower limit value $P_{T2L}$, $P_{T3L}$, or $P_{T4L}$ and the upper limit value $P_{T2H}$, $P_{T3H}$, or $P_{T4H}$). The proportional valve control unit 128 performs the feedback control on the proportional valve 90 so that the exhaust gas pressure detected by the exhaust gas pressure detection unit 110 will fall within the range between the lower limit value and the upper limit value of the reset target exhaust gas pressure (a first stage $B_1$, a second stage $B_2$, and a third stage $B_3$ of the steady state in the automatic control).

On the other hand, the doctor decreases the pressure of the dental handpiece 20 (and the bur 30) against the patient's tooth, the load acting on the turbine blades 24 decreases and accordingly the exhaust gas pressure (the exhaust gas pressure $P_E$ at a time point $t_9$) detected by the exhaust gas pressure detection unit 110 becomes higher than (is increased from) the steady-state exhaust gas pressure (the exhaust gas pressure $P_E$ at a time point $t_8$). The target exhaust gas pressure setting unit 126 resets the target exhaust gas pressure so that the greater the range of fluctuation in the exhaust gas pressure (the absolute value of the amount of increase), the lower the target exhaust gas pressure (the lower limit value $P_{TSL}$ and the upper limit value $P_{TSH}$). The proportional valve control unit 128 performs the feedback control on the proportional valve 90 so that the exhaust gas pressure detected by the exhaust gas pressure detection unit 110 will fall within the range between the lower limit value and the upper limit value of the reset target exhaust gas pressure (a fourth stage $B_4$ of the steady state in the automatic control).

Although not shown, in the case where the doctor selects the operation-based control by operating the operation unit 6f, the target exhaust gas pressure setting unit 126 reads the multiple target exhaust gas pressures associated with the type of dental handpiece 20 grasped by the doctor from the target exhaust gas pressure database 121c and causes the display unit 6e to display the multiple target exhaust gas pressures thus read. The doctor selects one of the multiple target exhaust gas pressures displayed on the display unit 6e by operating the operation unit 6f. The target exhaust gas pressure setting unit 126 obtains the operation result on the operation unit 6f, and sets the target exhaust gas pressure according to the operation result as the new target exhaust gas pressure. The proportional valve control unit 128 performs the feedback control on the proportional valve 90 so that the exhaust gas pressure $P_E$ detected by the exhaust gas pressure detection unit 110 will be equalized to the reset target exhaust gas pressure. As described above, the target exhaust gas pressure setting unit 126 may be configured to cause the display unit 6e to display the rotational speeds (for example, 200,000 rpm, 300,000 rpm, and 400,000 rpm) of the turbine blades 24 (see FIG. 3) stored in association with the target exhaust gas pressure initial value. In this case, the target exhaust gas pressure setting unit 126 sets the target exhaust gas pressure associated with the selected rotational speed as the target exhaust gas pressure for the feedback control.

The dental handpiece control system 2 according to the embodiment of the present invention includes the supply gas passage 60 to supply the compressed gas from the compressed gas source 50 to the turbine blades 24 provided in the dental handpiece 20, the exhaust gas passage 70 to discharge the compressed gas after rotating the turbine blades 24, the exhaust gas pressure detection unit 110 to detect the exhaust gas pressure, which is the pressure of the compressed gas in the exhaust gas passage 70, the target exhaust gas pressure setting unit 126 to set the target exhaust gas pressure, and the supply gas pressure control unit (the proportional valve control unit 128) to control the supply gas pressure, which is the pressure of the compressed gas to be supplied to the turbine blades 24. The supply gas pressure control unit controls the supply gas pressure so that the exhaust gas pressure detected by the exhaust gas pressure detection unit 110 will be equalized to the target exhaust gas pressure.

Thus, the dental handpiece control system 2 is capable of modifying the target exhaust gas pressure and thereby achieving the rotational speed (and the torque) of the turbine blades 24 (and the bur 30) suitable for a situation (such as a load).

Moreover, in the dental handpiece control system 2, the target exhaust gas pressure setting unit 126 selects one of the multiple target exhaust gas pressures stored in advance, based on an operation by an operator.

Thus, the dental handpiece control system 2 is capable of modifying the target exhaust gas pressure based on an operation by the operator (doctor), and thereby achieving the rotational speed (and the torque) of the turbine blades 24 (and the bur 30) suitable for a situation (such as a load).

Moreover, in the dental handpiece control system 2, the target exhaust gas pressure setting unit 126 sets the target exhaust gas pressure based on the range of fluctuation in the exhaust gas pressure from the steady-state value.

Therefore, the dental handpiece control system 2 is capable of automatically modifying the target exhaust gas pressure based on the detection result by the exhaust gas pressure detection unit 110 and thereby achieving the torque of the turbine blades 24 (and the bur 30) suitable for a situation (such as a load).

Furthermore, in the dental handpiece control system 2, in the case where the exhaust gas pressure is decreased from the steady-state value, the target exhaust gas pressure setting unit 126 sets the target exhaust gas pressure so that the greater the range of fluctuation, the higher the target exhaust gas pressure.

Therefore, in the case where the load acting on the dental handpiece 20 increases, the dental handpiece control system 2 is capable of automatically modifying the target exhaust gas pressure depending on the range of fluctuation in the load and thereby achieving the torque of the turbine blades 24 (and the bur 30) suitable for the situation (such as the load).

In addition, in the dental handpiece control system 2, in the case where the exhaust gas pressure is increased from the steady-state value, the target exhaust gas pressure setting unit 126 sets the target exhaust gas pressure so that the greater the range of fluctuation, the lower the target exhaust gas pressure.

Therefore, in the case where the load acting on the dental handpiece 20 decreases, the dental handpiece control system 2 is capable of automatically modifying the target exhaust gas pressure depending on the range of fluctuation in the load and thereby achieving the torque of the turbine blades 24 (and the bur 30) suitable for a situation (such as the load).

Moreover, in the dental handpiece control system 2, the target exhaust gas pressure setting unit 126 resets the target exhaust gas pressure every time the exhaust gas pressure fluctuates from the steady-state value.

Therefore, the dental handpiece control system 2 is capable of automatically modifying the target exhaust gas pressure any number of times in response to changes in the load acting on the dental handpiece 20 resultant from operations by an operator (doctor) during a dental treatment, and thereby achieving the torque of the turbine blades 24 (and the bur 30) suitable for situations (such as the load).

Additionally, in the dental handpiece control system 2, the target exhaust gas pressure setting unit 126 sets the lower limit value and the upper limit value of the target exhaust gas pressure, and the supply gas pressure control unit performs control to keep the supply gas pressure constant in the case where the exhaust gas pressure becomes a value between the lower limit value and the upper limit value of the target exhaust gas pressure.

Therefore, the dental handpiece control system 2 is capable of stabilizing the rotational speed (and the torque) of the turbine blades 24 (and the bur 30) without modifying the target exhaust gas pressure in response to a minute fluctuation in the exhaust gas pressure. In addition, the dental handpiece control system 2 is capable of suppressing overshoot, undershoot, or the like caused by the influence of the length of the exhaust gas passage 70 (the distance between the dental handpiece 20 and the exhaust gas pressure detection unit 110) or the like.

Then, the dental handpiece control system 2 includes the proportional valve 90 provided on the supply gas passage 60 and the supply gas pressure control unit controls the opening ratio of the proportional valve 90.

Therefore, the dental handpiece control system 2 controls the proportional valve 90 on the supply gas passage 60 based on the exhaust gas pressure, and thereby is capable of adjusting the exhaust gas pressure in a stepless manner and suitably equalizing the exhaust gas pressure to the target exhaust gas pressure.

Hereinabove, the embodiment of the present invention is described, but the present invention should not be limited to the embodiment but may be modified as needed without departing from the gist of the present invention. For example, the type and normality determination database 121a may be divided into a type determination database for determining a type of dental handpiece 20 and a normality determination database for determining whether the dental handpiece 20 is normal.

Reference Signs List

| | |
|---|---|
| 1 | dental treatment unit |
| 2 | dental handpiece control system |
| 3 | chair module |
| 3a | chair main body |
| 4 | base unit |
| 5 | first support section |
| 5a, 5b | arm |
| 6 | treatment table |
| 6a | table |
| 6b | hanger |
| 6c | hose |
| 6d | attachment |
| 6e | display unit |
| 6f | operation unit |
| 7 | second support section |
| 7a, 7b | arm |
| 8 | assistant table |
| 8a | table |
| 8b | hanger |
| 8c | hose |
| 8d | attachment |
| 9 | foot controller |
| 20 | dental handpiece |
| 21 | intra-piece supply gas passage |
| 22 | turbine chamber |
| 23 | intra-piece exhaust gas passage |
| 24 | turbine blades |
| 30 | bur |
| 40 | instrument |
| 50 | compressed gas source |
| 60 | supply gas passage |
| 61 | upstream supply gas passage |
| 62 | passage switching unit |
| 63 | downstream supply gas passage |
| 70 | exhaust gas passage |
| 71 | upstream exhaust gas passage |
| 72 | passage integration unit |
| 73 | downstream exhaust gas passage |
| 80 | on-off valve |
| 90 | proportional valve |
| 100 | placement detection unit |
| 110 | exhaust gas pressure detection unit |
| 120 | control unit |
| 121 | storage unit |
| 121a | type and normality determination database |
| 121b | malfunction identification database |
| 121c | target exhaust gas pressure database |
| 122 | on-off valve control unit |
| 123 | control valve control unit |
| 124 | exhaust gas pressure time characteristic calculation unit |
| 125 | determination unit |
| 126 | target exhaust gas pressure setting unit |
| 127 | comparison unit |

128    proportional valve control unit (supply gas pressure control unit)

**Claims**

1. A dental handpiece control system comprising:

   a supply gas passage configured to supply compressed gas from a compressed gas source to a turbine blade provided in a dental handpiece;
   an exhaust gas passage configured to discharge the compressed gas after rotating the turbine blade;
   an exhaust gas pressure detection unit configured to detect an exhaust gas pressure which is a pressure of the compressed gas in the exhaust gas passage;
   a target exhaust gas pressure setting unit configured to set a target exhaust gas pressure; and
   a supply gas pressure control unit configured to control a supply gas pressure which is a pressure of the compressed gas to be supplied to the turbine blade, wherein
   the supply gas pressure control unit controls the supply gas pressure so that the exhaust gas pressure detected by the exhaust gas pressure detection unit will be equalized to the target exhaust gas pressure.

2. The dental handpiece control system according to claim 1, wherein the target exhaust gas pressure setting unit selects one target exhaust gas pressure based on an operation by an operator from among a plurality of the target exhaust gas pressures stored in advance.

3. The dental handpiece control system according to claim 1, wherein the target exhaust gas pressure setting unit sets the target exhaust gas pressure based on a range of fluctuation in the exhaust gas pressure from a steady-state value.

4. The dental handpiece control system according to claim 3, wherein in a case where the exhaust gas pressure is decreased from the steady-state value, the target exhaust gas pressure setting unit sets the target exhaust gas pressure so that the greater the range of fluctuation, the higher the target exhaust gas pressure.

5. The dental handpiece control system according to claim 3, wherein in a case where the exhaust gas pressure is increased from the steady-state value, the target exhaust gas pressure setting unit sets the target exhaust gas pressure so that the greater the range of fluctuation, the lower the target exhaust gas pressure.

6. The dental handpiece control system according to any one of claims 3 to 5, wherein the target exhaust gas pressure setting unit resets the target exhaust gas pressure every time the exhaust gas pressure fluctuates from the steady-state value.

7. The dental handpiece control system according to claim 3, wherein

   the target exhaust gas pressure setting unit sets a lower limit value and an upper limit value of the target exhaust gas pressure, and
   the supply gas pressure control unit performs control to keep the supply gas pressure constant in a case where the exhaust gas pressure becomes a value between the lower limit value and the upper limit value of the target exhaust gas pressure.

8. The dental handpiece control system according to claim 1, further comprising a proportional valve provided on the supply gas passage, wherein
   the supply gas pressure control unit controls an opening ratio of the proportional valve.

# FIG. 1

# FIG. 2

## FIG. 3

## FIG. 4

PROPORTIONAL VALVE ~ 90

2

120

FOOT CONTROLLER 9

CONTROL UNIT ~ 122

ON-OFF VALVE CONTROL UNIT

PROPORTIONAL VALVE CONTROL UNIT ~ 128

121

ON-OFF VALVE

80 ~ ~ 100

PLACEMENT DETECTION UNIT

CONTROL VALVE CONTROL UNIT 123

COMPARISON UNIT 127

STORAGE UNIT

TYPE AND NORMALITY DETERMINATION DATABASE 121a

PASSAGE SWITCHING UNIT

TARGET EXHAUST GAS PRESSURE SETTING UNIT ~ 126

MALFUNCTION IDENTIFICATION DATABASE 121b

62 ~ 110

EXHAUST GAS PRESSURE DETECTION UNIT

EXHAUST GAS PRESSURE TIME CHARACTERISTIC CALCULATION UNIT 124

DETERMINATION UNIT ~ 125

TARGET EXHAUST GAS PRESSURE DATABASE 121c

6e ~ DISPLAY UNIT

OPERATION UNIT ~ 6f

18

## FIG. 5

FIG. 6

# FIG. 7

# FIG. 8

# FIG. 9

PRESSURE P

$P_S$

$P_E$

$P_{TI}$

$P_{TH}$

$P_{TG}$

G

H

I

$P_E$ , $P_{EI}$

$P_E$ , $P_{EH}$

$P_E$ , $P_{EG}$

$P_S$ , $P_{SI}$

$P_S$ , $P_{SH}$

$P_S$ , $P_{SG}$

TIME t

# FIG. 10

START

**S1** REMOVE FROM HANGER — No

Yes

**S2** START ROTATION — No

Yes

**S3** DETERMINE TYPE OF DENTAL HANDPIECE

**S4** DETERMINE NORMALITY OF DENTAL HANDPIECE — MALFUNCTION

NORMAL

**S5** IDENTIFY TYPE OF MALFUNCTION IN DENTAL HANDPIECE

**S7** PLACE ON HANGER — No

Yes

**S6** NOTIFY OF MALFUNCTION

**S8** RESET TYPE OF DENTAL HANDPIECE

END

## FIG. 11

## INTERNATIONAL SEARCH REPORT

International application No.

**PCT/JP2024/020203**

**A. CLASSIFICATION OF SUBJECT MATTER**

*A61C 1/02*(2006.01)i; *A61C 1/05*(2006.01)i
FI:  A61C1/02 F; A61C1/05 A

According to International Patent Classification (IPC) or to both national classification and IPC

**B. FIELDS SEARCHED**

Minimum documentation searched (classification system followed by classification symbols)

A61C1/02: A61C1/05

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-221300 A (YOSHIDA SEISAKUSHO K.K.) 21 December 2017 (2017-12-21) | 1-8 |
| A | JP 63-197450 A (MORITA MFG CO., LTD.) 16 August 1988 (1988-08-16) | 1-8 |
| A | US 3865505 A (FLATLAND, L. P.) 11 February 1975 (1975-02-11) | 1-8 |
| A | JP 54-27294 A (YOSHIDA SEISAKUSHO K.K.) 01 March 1979 (1979-03-01) | 1-8 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/020203**

| Patent document cited in search report | | | Publication date (day/month/year) | Patent family member(s) | | | Publication date (day/month/year) |
|---|---|---|---|---|---|---|---|
| JP | 2017-221300 | A | 21 December 2017 | WO | 2017/217405 | A1 | |
| JP | 63-197450 | A | 16 August 1988 | (Family: none) | | | |
| US | 3865505 | A | 11 February 1975 | (Family: none) | | | |
| JP | 54-27294 | A | 01 March 1979 | (Family: none) | | | |

Form PCT/ISA/210 (patent family annex) (July 2022)

**EP 4 751 677 A1**

REFERENCES CITED IN THE DESCRIPTION

**Patent documents cited in the description**

- JP 5314746 B
- US 3865505 A
- JP 2017221300 A